# EUROPEAN PATENT SPECIFICATION

(11) **EP 0 911 716 B1**
(45) Date of publication and mention of the grant of the patent: **02.01.2004**
(21) Application number: 98120032.2
(22) Date of filing: 22.10.1998
(51) Int. Cl.: G05G 5/18, B60R 16/00

(54) **Angular positioning and retention device**
Winkelpositionierungs- und Haltevorrichtung
Dispositif de positionnement angulaire et de rétention

(30) Priority: 24.10.1997 IT TO970210 U
(43) Date of publication of application: 28.04.1999
(73) Proprietor: Valeo Cablaggi Commutazione S.r.l., 15023 Felizzano (Alessandria) (IT)
(72) Inventor: Monti, Carlo, 15023 Felizzano (IT)
(74) Representative: Franzolin, Luigi

(56) References cited:
- FR-A- 602 510
- US-A- 5 272 290
- US-A- 5 537 893

## Description

The present invention relates to an angular positioning and retention device, particularly for a driver's switch control unit for vehicles (see, for example, US-A-5 537 893, corresponding to the preamble of claim 1).

In driver's switch control units, for the angular positioning of the lever and, in particular the windscreen wiper lever, it is known to utilise releasable angular positioning and retention devices comprising a toothed circular sector, commonly known by the term "position marker", which is fixedly connected to a fixed support body and provided with a plurality of rigid teeth securely connected to one another to define between them a plurality of flared seats. The seats are selectively engaged in use by a detent element which is carried by the associated lever, is coupled to the toothed sector by means of one or more rolling bodies, and is biased by a spring to snap engage one or other of the seats as it slides to and fro along the toothed sector during rotation of the lever itself about its pivot axis.

Known positioning devices of the above-described type, although universally utilised, suffer from the main disadvantages of being relatively noisy and of requiring relatively high operating forces that is say to displacement of the detent element between one seat and the other, and in any event of the force varying unexpectedly upon variation in the angular position of the lever.

The object of the present invention is that of providing an angular positioning and retention device of the above described type which makes it possible to overcome the above-explained disadvantages in a simple and economic manner.

According to the present invention there is provided an angular positioning and retention device, particularly for a lever of a driver's switch control unit for vehicles, comprising a cam body defining a plurality of seats and a movable detent element which can be coupled to a control lever to turn about a pivot axis and selectively engage the said seats; characterised in that each of the said cam body and the said detent element includes at least one elastic portion yielding resiliently during rotation of the said detent element about the said pivot axis.

The invention will now be described with reference to the attached drawing which illustrates, in exploded perspective view, a preferred, but non-limitative embodiment of the angular positioning and retention device formed according to the present invention.

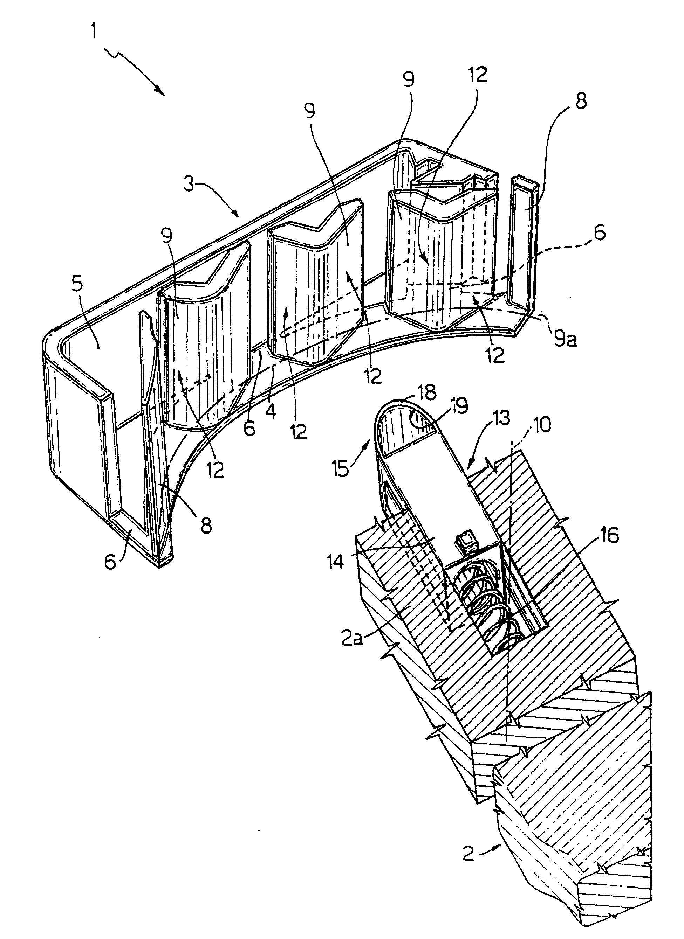

In Figure 1 the reference numeral 1 indicates an angular positioning and retention device for a lever 2 of a driver's switch control unit (not illustrated) for vehicles. In the particular example described the device 1 is associated with a lever 2 for actuating a windscreen wiper unit (not illustrated), and comprises a cam-like position-marker body 3 which is fixedly connected in a known manner to a fixed body (not illustrated) and comprises, in turn, a resilient bottom wall 4 and a side wall 5. The side wall 5 extends orthogonally of the bottom wall 4 in a position spaced from the wall 4 itself and is fixedly connected to the wall 4 by means of three resiliently deformable plate-like arms 6 spaced from one another and integral with the walls 4 and 5.

The bottom wall 4 integrally carries two lateral end teeth 8 and three intermediate V-shape teeth 9 which have respective end portions securely connected to the bottom wall 4 along a section 9a of a circumference having an axis 10 parallel to the side wall 5 and respective opposite free end portions. The teeth 8 and 9 extend parallel to the axis 10 in a position spaced from the wall 5 and define between them four seats 12 tapered towards the side wall 5 and open towards the wall 5 itself.

The seats 12 are selectively engaged by a detent element 13 which is made of thermoplastic material, preferably nylon, is rotatable together with the lever 2 about the axis 10 and has its end portion 14 coupled in a known way to an end portion 2a of the lever 2 in such a way as to be slidable in a direction orthogonal to the axis 10.

The detent element 13 further comprises a hollow end portion 15 which slidingly cooperates with the teeth 9 and is urged against the teeth 8, 9 by the action exerted by a spring 16 interposed between the portions 2a and 14. In particular, the portion 15 is defined by a resiliently deformable curved wall 18 which is U-shaped, has its generatrix parallel to the axis 10, and, together with the portion 2a, delimits a through hole 19.

From the above it will be seen that the structural characteristics both of the position marker body 3 and the detent element 13 allow, above all, to drastically reduce the noise of the device 1 during actuation of the lever 2 and, at the same time, to reduce both the manipulating forces and the variability of such forces upon variation in the angular position of the lever 2.

The above derives essentially from the fact that both the teeth 8, 9 and the end portion 15 of the detent element 13 are all resiliently yieldable portions.

It is, in fact, evident that during rotation of the lever 2 the forces which are exchanged between the position-marker body 3 and the detent element 13 cause direct deflection of the teeth 8 and produce a bending both of the arms 6 and the bottom wall 4 to which, obviously, there are consequent corresponding movements of the teeth 9 which behave, therefore, actually as shock absorbers. The same forces exchanged between the position-marker body 3 and the detent element 13 are then also the cause of the resilient deformation of the end portion 15 of the detent element 13; it has been established experimentally that the resilient deformation of this portion involves, in particular, a reduction of the speed with which the portion 15 itself engages the different seats 12.

The resilience of both the teeth 8, 9 and the end portion 15 of the detent element 13 then allow, with respect to the known rigid arrangements, a reduction in the preload of the spring 16 to the benefit of both the forces which have to be exerted on the lever 2 and the noise, with a consequent significant improvement in making the movement pleasant.

Finally, the structural characteristics both of the position-marker body 3 and the detent element 13 allow eliminating the use of rolling bodies associated with the end portions of the known detent elements, thus making the detent element significantly simpler to produce and very much more economical.

From the above it will be evident that the device 1 described can have modifications and variations introduced thereto which do not depart from the scope of the present invention as defined in the appended claims. In particular, the teeth 8, 9 and the portion 15 of the detent element 13 can have different shapes and geometries from those described by way of example, and likewise, different arrangements can be provided for connecting the teeth 8, 9 to the wall 5 in a resilient manner.

## Claims

1. An angular positioning and retention device (1) particularly for a lever of a driver's switch control unit for vehicles, comprising a cam body (3) defining a plurality of seats (12) and a movable detent element (15) which can be coupled to a control lever (2) to turn about a pivot axis (10) and selectively engage in the said seats (12); **characterised in that** each of the cam body (3) and the said detent element (13) includes at least one resilient portion (8, 9, 15) yieldable during turning of the said detent element (13) about the said pivot axis (10).

2. A device according to Claim 1, **characterised in that** the said cam body (3) comprises a plurality of teeth (8, 9) extending parallel to the said pivot axis (10) and separated from one another; each tooth (8, 9) having a first axial free end portion.

3. A device according to Claim 2, **characterised in that** one (8) of the said teeth (8, 9) is a flexible tooth.

4. A device according to Claim 2, or Claim 3 **characterised in that** the said cam body (3) comprises a support portion (5) which can be fixedly connected to a fixed body, and **in that** at least one (9) of the said teeth (8, 9) has its second axial end portion opposite the associated said first axial end portion connected to the said support portion (5) by resiliently deformable connection means (4, 6).

5. A device according to Claim 4, **characterised in that** the said connection means (4, 6) are common to all the said teeth (8, 9).

6. A device according to any preceding claim, **characterised in that** the said resilient yieldable portion (15) constitutes part of the said detent element (13).

7. A device according to Claim 6, **characterised in that** the said resilient yieldable portion (15) is an end portion of the said detent element (13) operable to selectively engage the said seat (12).

8. A device according to Claim 7, **characterised in that** the end portion (15) of the said detent element (13) comprises a curved resilient wall (18) partially delimiting a related cavity (19).

## Patentansprüche

1. Eine Winkelpositionierungs- und Rückhaltevorrichtung (1), insbesondere für einen Hebel einer Schaltersteuereinheit eines Fahrers für Fahrzeuge, umfassend einen Nockenkörper (3), welcher eine Vielzahl von Sitzen (12) ausbildet, und ein bewegbares Rastelement (13), welches an einen Steuerhebel (2) gekoppelt werden kann, um sich über einer Drehachse (10) zu drehen und wahlweise in die gesagten Sitze (12) einzugreifen; **dadurch gekennzeichnet, dass** sowohl der Nockenkörper (3) als auch das Rastelement (13) wenigstens einen elastischen Bereich (8, 9, 15) aufweisen, welcher während des Drehens des gesagten Rastelements (13) über der gesagten Drehachse (10) nachgiebig ist.

2. Eine Vorrichtung gemäß Anspruch 1, **dadurch gekennzeichnet, dass** der gesagte Nockenkörper (3) eine Vielzahl von Zähnen (8, 9) umfasst, welche sich parallel zu der gesagten Drehachse (10) erstrecken und voneinander getrennt sind; jeder Zahn (8, 9) weist einen ersten axial freien Endbereich auf.

3. Eine Vorrichtung gemäß Anspruch 2, **dadurch gekennzeichnet, dass** einer (8) der gesagten Zähne (8, 9) ein flexibler Zahn ist.

4. Eine Vorrichtung gemäß Anspruch 2 oder Anspruch 3, **dadurch gekennzeichnet, dass** der gesagte Nockenkörper (3) einen Tragbereich (5) aufweist, welcher feststehend an einen befestigten Körper angeschlossen werden kann, und dadurch, dass wenigstens einer (9) der gesagten Zähne (8, 9) seinen zweiten axialen Endbereich entgegengesetzt zu dem zugeordneten gesagten ersten axialen Endbereich aufweist, der an den gesagten Tragbereich (5) durch elastisch verformbare Verbindungsmittel (4, 6) angeschlossen ist.

5. Eine Vorrichtung gemäß Anspruch 4, **dadurch gekennzeichnet, dass** die gesagten Verbindungsmittel (4, 6) gemeinsam für alle die gesagten Zähne (8, 9) sind.

6. Eine Vorrichtung gemäß einem der vorhergehenden Ansprüche, **dadurch gekennzeichnet, dass** der gesagte elastisch nachgiebige Bereich (15) einen Teil des gesagten Rastelements (3) ausbildet.

7. Eine Vorrichtung gemäß Anspruch 6, **dadurch gekennzeichnet, dass** der gesagte elastisch nachgiebige Bereich (15) ein Endbereich des gesagten Rastelements (13) ist, welcher betätigbar ist, um wahlweise in den gesagten Sitz (12) einzugreifen.

8. Eine Vorrichtung gemäß Anspruch 7, **dadurch gekennzeichnet, dass** der Endbereich (15) des gesagten Rastelements (13) eine gekrümmte elastische Wand (18) aufweist, welche teilweise einen zugehörigen Hohlraum (19) begrenzt.

## Revendications

1. Dispositif de positionnement angulaire et de rétention (1), en particulier pour le levier d'un élément de commande de changement de vitesse du conducteur pour des véhicules, comprenant un corps de came (3) définissant une pluralité de sièges (12) et un élément mobile cranté (15) pouvant être couplé à un levier de commande (2) pour tourner autour d'un axe de pivotement (10) et venir en prise de façon sélective dans lesdits sièges (12) ; **caractérisé en ce que** chacun parmi le corps de came (3) et ledit élément cranté (13) comporte au moins une partie élastique (8, 9, 15) déformable pendant la rotation dudit élément cranté (13) autour dudit axe de pivotement (10).

2. Dispositif selon la revendication 1, **caractérisé en ce que** ledit corps de came (3) comprend une pluralité de dents (8, 9) s'étendant parallèlement audit axe de pivotement (10) et séparées les unes des autres ; chaque dent (8 , 9) ayant une première partie d'extrémité axiale libre.

3. Dispositif selon la revendication 2, **caractérisé en ce que** l'une (8) desdites dents (8, 9) est une dent flexible.

4. Dispositif selon la revendication 2 ou la revendication 3, **caractérisé en ce que** ledit corps de came (3) comprend une partie support (5) pouvant être reliée de manière fixe à un corps fixe et **en ce qu'**au moins une (9) desdites dents (8, 9) a sa seconde partie d'extrémité axiale opposée à ladite première partie d'extrémité axiale associée reliée à ladite partie support (5) par des moyens de liaison déformables de manière élastique (4, 6).

5. Dispositif selon la revendication 4, **caractérisé en ce que** lesdits moyens de liaison (4, 6) sont communs à toutes lesdites dents (8, 9).

6. Dispositif selon l'une quelconque des revendications précédentes, **caractérisé en ce que** ladite partie déformable élastique (15) fait partie dudit élément cranté (13).

7. Dispositif selon la revendication 6, **caractérisé en ce que** ladite partie déformable élastique (15) est une partie d'extrémité dudit élément cranté (13) pouvant être actionnée pour venir en prise de manière sélective avec ledit siège (12).

8. Dispositif selon la revendication 7, **caractérisé en ce que** la partie d'extrémité (15) dudit élément cranté (13) comprend une paroi élastique incurvée (18) délimitant partiellement une cavité associée (19).
